# EUROPEAN PATENT SPECIFICATION

(11) **EP 1 819 509 B1**
(45) Date of publication and mention of the grant of the patent: **04.05.2011**
(21) Application number: 05796146.8
(22) Date of filing: 21.10.2005
(51) Int. Cl.: B32B 27/12, E04D 12/00, E04B 1/78

(54) **MULTI-LAYER THERMAL INSULATION SYSTEM**
MEHRLAGIGES WÄRMEISOLIERSYSTEM
SYSTEME D'ISOLATION THERMIQUE MULTICOUCHES

(30) Priority: 22.10.2004 GB 0423523; 13.09.2005 GB 0518660
(43) Date of publication of application: 22.08.2007
(73) Proprietor: Hunt Technology Limited, Rickmansworth, Hertfordshire WD3 1JJ (GB)
(72) Inventor: SQUIRES, Leslie James, Rosemount Blairgourie PH10 6LA (GB); WOODBRIDGE, Timothy, Hertfordshire WD3 2DF (GB)
(74) Representative: Bumke, Jakob Wenzel
(86) International application number: PCT/GB2005/004085
(87) International publication number: WO 2006/043092

(56) References cited:
- EP-A- 0 242 480
- EP-A- 0 243 827
- EP-A- 1 216 612
- EP-A- 1 400 348
- WO-A-01/58683
- FR-A- 2 765 304
- GB-A- 2 398 758
- US-A- 4 395 455
- US-A- 4 433 019
- US-A- 4 777 086
- US-A- 5 711 847

## Description

The present invention relates to liquid impermeable, vapour permeable thermal insulation structures including a plurality of layers, more particularly, but not exclusively for use in the construction industry, for example as housewrap, roof space insulation or roofing underlay in buildings. Such liquid impermeable, vapour permeable thermal insulation structures may be suitable for any other insulation application which requires the release of excess water vapour, such as apparel, including clothing and gloves, or temporary structures such as tents and covers.

Liquid impermeable and vapour permeable thermal insulation structures are known in the art. Some such thermal insulation structures are based on mineral fibre or glass fibre, which have formed the basis of a range of insulation products for many years. Such structures may be rigid or flexible. Other thermal insulation materials are based on foamed plastics including, but not limited to, polyethylene, polystyrene and polyurethane. These structures are essentially rigid and are usually supplied in the form of rigid boards.

DE 25 14 259 (Wolfgang Haacke) describes a rigid board insulation system based on either stabilised mineral wool or plastic foam. The boards are shaped to be interlocking and are installed in the building with an assortment of metal T-pieces and spacing clips, one of which is designed to provide a defined air space above the insulation boards. The insulation boards are laminated on their inside surface (with respect to the building) with a water-vapour barrier layer which may be coated with aluminium foil. The outer surface of the insulation board is laminated to a water-repellent and water vapour permeable diffusion layer which also helps prevent the intrusion of air into the insulation layer. The composition of this water-repellent layer is not specified other than it is a fabric material.

US 4 230 057 (Milton Kurz) describes a thermal insulation material comprising at least two layers of metallised plastic film alternating with, and encapsulated by, layers of mesh or nets which may be woven or knitted or derived from a nonwoven material. The layers are bonded together by sewing. The patent describes the advantages of a thin, flexible thermal insulation structure. However, the use of sewing means that the structure is not waterproof while the stitching holes also act as thermal bridges reducing the thermal efficiency of the insulation. Also the material in general is not water vapour permeable other than through the stitching holes.

DE 42 10 392 (Werner Neu) describes a thermal insulation board coated on at least one side by a composition having a lower water vapour permeability than the insulation board.

WO 96/32252 (W.L. Gore & Associates) does not refer to construction industry products but describes how a microporous membrane having a metallised coating on the surface and which does not block the micropores may be used in the manufacture of military clothing or tents. The material described is highly reflective of infra-red radiation while being waterproof and moisture vapour permeable.

WO 96/33321 (Fraunhofer-Gesellschaft zur Förderung der Angewandten Forschung E.V.) describes the use of a polyamide film as a vapour control layer. This is not itself an insulation product but is for use in conjunction with a thermal insulation layer. Positioned over the inside surface of an insulation layer, it acts to control the rate of moisture permeating from the inside of the building. It therefore reduces the probability of condensation forming inside the insulation layer which would have the effect of reducing its insulation properties. The polyamide layer described has a water vapour resistance which varies depending on the environmental humidity.

WO 99/61720 (Klöber) describes a thermal insulation system designed to be installed between roof rafters. The insulation layer has an air barrier layer on the inside surface of the insulation. The insulation layer itself is permeable to air and water vapour. The top surface of the insulation has a water impermeable and water vapour permeable covering which includes a membrane which could be a meltblown layer or a "diffusion open" waterproof film to provide the key functional properties. The air barrier inside layer and the water impermeable top layer may extend beyond the width of the insulation layer so as to overlap the rafters and the outer layers of insulation installed in the adjacent rafter space.

WO 99/60222 (Pirityi) describes a heat reflecting metal foil, or metal coating formed by vacuum deposition, bonded on both sides by plastic film to protect the reflective metal surface from oxidation. The reflective film composite is bonded on one side to an insulating layer which may be a plastic layer entrapping air to form a vapour impermeable reflective insulation product. Alternatively, the reflective film composite may be perforated over the whole of its surface and bonded on one side to an insulating felt to form a vapour permeable reflective insulation product.

Similar reflective insulation materials are described in EP 1 331 316 A1 (Thermal Economics Limited) which describes the use of a perforated reflective foil bonded to a breathable textile layer as a reflective insulating material for walls of frame construction buildings and EP 1 400 348 A2 (Don & Low Limited) which uses thermal point bonding to bond reflective metallised films to the insulating fabric layer, also for building applications.

DE 100 07 775 (WKI Isoliertechnik GmbH Berlin) describes a board of expanded polystyrene or similar in which the inclusion of mineral wool fibres improves the physical properties of the board as well as imparting a measure of moisture vapour permeability.

WO 02/05580 (Riedel) describes a multilayer heat insulation structure comprising a series of metallised reflecting films separated by bubble films. The components are bonded by continuous welding along the edges and by point welding at the centre of the product. The insulation, which is water vapour impermeable, is recommended for both roofs and walls of buildings.

GB 2 398 758 (Laurent Thierry S.A.) describes an impermeable multilayer insulation material comprising alternating reflective film layers and fibrous or foamed batts containing perforations. Although the outer film layers may be moisture vapour permeable or moisture vapour impermeable, the insulation product itself is moisture vapour impermeable due to the metallised film layers comprising at least the inner film layers. The perforations in the batts create cells of air claimed to improve the thermal resistance properties of the insulation as a whole by undisclosed means. The components of the insulation are bonded together by "coupling points" or spot bonds through the component layers provided by adhesive or preferably by spot thermal or ultrasonic welding. The spot bonds which are distributed over the planar surface of the insulation in areas away from the perforations provided in the batts form cold bridges across the thickness of the insulation..

A thermal insulation material is one which reduces the transmission of heat energy in any or all of its forms: by conduction, radiation and convection.

Still air has a very low thermal conductivity and so is an excellent thermal insulator. Air must be contained within a structure however, to minimize the effect of heat dissipation through convection currents. Solid materials have higher thermal conductivities than still air. The resultant thermal conductivity of the insulation structure will therefore be higher than the air contained within it. The thermal insulation properties of a structure can be optimised by using as little solid as possible consistent with reducing air convection within the structure. The inclusion of reflective surfaces within an insulation structure further improves its efficiency by reflecting light, including incident infrared radiation.

The presence of water within these structures can severely debase their thermal insulation properties. Water is not only a good thermal conductor but is also able to dissipate heat by evaporation. In evaporation, heat energy is transferred to liquid water molecules giving them sufficient energy to leave their liquid environment as gaseous water vapour. It is important that the thermal insulation properties of a structure are retained by excluding water from it. An ideal thermal insulation structure therefore must be designed so as to reduce the probability of condensation forming within it.

Many of these principles are incorporated in thermal insulation structures of the prior art cited above although there are other features which are important in the design of insulation systems. These are discussed in the following section with reference to the cited prior art and to currently commercially available insulation materials.

One feature of a good insulation material to be considered is its thermal efficiency per unit thickness, e.g. its thermal conductivity, W/mK. In certain circumstances, for example when insulation is required over roof rafters or in frame construction buildings where there is a limit to the thickness of the frame or to the cavity adjacent to the frame, it is an advantage to use a thin insulation material. Thus although WO 99/61720 (Klöber) describes an insulation material which has many desirable features such as air impermeability and moisture vapour permeability, it is based upon traditional glass or mineral fibre insulation and designed to occupy the full depth of the rafter space. Such a material would not be suitable for applications requiring thin, but equally thermally efficient, insulation systems.

A second practical feature of a thermal insulation material is its consistency of insulation properties over the whole of the area to be protected. It has been found that traditional insulation materials such as mineral wool or glass wool have inconsistencies in the amount of insulation material or in the distribution of the mineral or glass wool fibre leading to "hot spots" or areas where the thermal insulation properties are significantly less than the insulation material as a whole. Many such traditional insulation materials are used without any other covering component so that air can move relatively freely through the insulation layer and allow heat dissipation through convection. Furthermore, such air movement through the insulation will be exacerbated by any movement in the air above or below the surfaces of the insulation layer. Similarly, some insulation structures have features which permit the escape of air through the insulation system allowing heat to dissipate by convection and allowing the ingress of cooler, and perhaps moist, air. The insulation materials described in US 4 230 057 (Kurz), WO 99/60222 (Pirityi), EP 1 331 316 (Thermal Economics Ltd) and EP 1 400 348 A2 (Don & Low Limited) all incorporate perforated layers interlaid with, or adjacent to, air permeable materials. Similarly, there are multilayer thermal insulation materials currently commercially available which are bonded and stabilised by sewing and hence have lines of stitch holes through the complete insulation assembly. These allow heat loss by convection and ingress of moist air. Examples of such materials are ACTIS TRISO-SUPER 9^{®} (Actis UK Limited) and SuperQuilt 14 (YBS Insulation Limited). Other multilayer insulation materials may be stabilised intermittently across their width by welding. WO 02/055800 (Riedel) describes such an insulation structure which is welded continuously along its edges and intermittently along its centre line. Similarly, another currently commercially available product, MULTIPRO^{®} TS250 (Actis UK Limited) has spaced apart, approximately circular welds to provide additional bonding and stabilisation across its width. This product, comprising reflective foils, polyester wadding layers with perforations and foam layers similar to those found in Actis Tri-iso Super 9, would appear to contain some of the features described in GB 2 398 758 (Laurent Thierry S.A.) The welded areas across the width of the insulation material will have lower insulation properties than the material as a whole and can be regarded as "thermal bridges".

Thirdly, flexible insulation materials also have advantages over rigid board insulation materials which are difficult to handle when being installed in a roof environment at height or in limited spaces. Rigid thermal insulation boards are also more difficult to cut to size, especially *in situ,* and to shape to suit particular structural features. The difficulty in cutting rigid insulation accurately to shape means that in practice there may be air gaps between the insulation board and the structure into which it is being installed resulting in a net loss in thermal insulation efficiency. DE 25 14 259 (Haacke), DE 42 10 392 A1 (Neu) and DE 100 07 775 A1 (WKI) all refer to rigid board insulation systems and many commercial examples are known.

One object of the present invention is to provide a multi-layered, highly thermally efficient, thin, flexible, air impermeable, liquid water impermeable, water vapour permeable insulation system which also controls the rate of permeation of water vapour through the insulation system and into the environment.

In accordance with fulfilling the first mentioned object of the invention and from one aspect, the present invention resides in a thermal insulation structure including a plurality of inner air and water vapour permeable insulating layers which entrap air and a water vapour permeable, at least substantially air impermeable film layer separating two said water vapour permeable insulating layers, the inner layers being sandwiched between first and second outer air and liquid water impermeable, water vapour permeable outer film layers, the construction and arrangement of the layers being such as to control, in use, water vapour transmission through the thermal insulation structure.

The words "at least substantially" used in relation to the air impermeable film layers covers microporous films, e.g. microporous polypropylene, polyurethane, polyester ether and polyethylene films which by their nature may have a degree of air permeability depending upon the conditions to which they are subjected and monolithic (molecular diffusion) moisture vapour permeable films which are air impermeable, including polyurethane, polyester ether, cellulose derived films such as Cellophane® and cellulose acetate films.

Hereinafter for convenience in relation to fulfilling the first object of the invention the words "air impermeable", are used to cover both at least substantially air impermeable and air impermeable layers.

The inner air and water vapour permeable insulating layers and water vapour permeable air impermeable film layers may be in the form of separate layers which are interleaved.

Alternatively, the air impermeable water vapour permeable film layers are formed as coatings on the respective surfaces of the insulating layers. Such coated insulating layers form a comparable structure of alternating air and water vapour permeable insulating layers and water vapour permeable air impermeable layers to the interleafed layers.

Such coatings may be formed by the extrusion of, for example, a polyurethane or copolyester or polyester ether polymer. Alternatively the coatings may be formed by emulsion or latex coating of a suitable polymeric material such as a polyvinyl acetate-vinyl alcohol copolymer.

Preferably, the insulating air entrapment layers are of at least substantially continuous, planar form. In other words, the insulating layers have oppositely facing surfaces which are at least substantially continuous and planar.

Expressed in another way, a thermal insulation structure in accordance with the invention includes a plurality of alternating air and water vapour permeable insulating layers which entrap air and water vapour permeable air impermeable film layers, with first and second outer ones of the film layers being liquid impermeable and sandwiching inner ones of the insulating and film layers therebetween, the construction and arrangement of the insulating and film layers being such as to control, in use, water vapour transmission through the thermal insulation structure.

In its simplest form, a thermal insulation structure in accordance with the invention may have five such alternating layers with their being three inner layers including two said insulating layers which entrap air separated by one said water vapour permeable air impermeable film layer and being sandwiched between two said outer water vapour permeable and air and liquid impermeable outer film layers.

Naturally, the number of alternating insulating air entrapment and film layers may vary in accordance with the particular thermal insulation requirements and consistent with retaining the desired the requisite thinness and flexibility. Thus, thermal insulating structures in accordance with the invention could have four insulating air entrapment layers and five film layers, or five insulating air entrapment and six film layers, and so on.

Of course, any of the film layers may incorporate one or more films, or constitute a film composite with a spunbond layer adhesively intermittently bonded to a film whether separating the insulating air entrapment layers or constituting the outer film layers.

In order to facilitate the control of moisture vapour escape (transmission) through the structure, the inner film layers should preferably have a moisture vapour permeability equal to or greater than the moisture vapour permeability of the first outer film layer to face what would be the higher humidity side of the insulation structure in use and which would correspond to the inside of a building. The second outer film layer to face the lower humidity side of the structure in use and which would correspond to the outside of the building, should preferably have a moisture vapour permeability equal to or greater than that of the inner film layers.

Expressed in yet another way, the outermost, or topmost if in a roof structure, of the two outer film layers has a moisture vapour permeability not less than that of the any other film component of the structure so that the moisture within the insulation can escape easily. In other words build-up of moisture within the insulation structure is reduced so that conditions within the insulation structure are less likely to fall below the dew point, reducing the risk of condensation and helping maintain the thermal efficiency of the insulation. Similarly should any condensation form within the insulation structure, the moisture vapour permeability of the components ensures that it is not permanently trapped there but will escape, in the form of moisture vapour, to the atmosphere as soon as conditions allow.

Build-up of moisture and condensation can cause a variety of problems. In any application, condensation within a thermal insulation structure will cause a reduction or loss of function of the thermal insulation properties. Condensation forming on the structure of a building may give rise to fungal and rot problems. Alternatively, within temporary dwellings such as emergency shelters, tents or covers, moisture and condensation can cause serious problems for the occupants both in terms of loss of thermal function of the shelter insulation, loss of thermal function of blankets and other personal items as well as attendant health problems. The insulation structures according to this invention may therefore be used where ventilation of a building is difficult and helps limit problems of condensation. By building, in this context, is meant any permanent or temporary shelter or cover in which thermal insulation is beneficial.

When separate films are used in or for the first and second outer film layers the rate of moisture escape (transmission) through the insulation structure may be further controlled.

In embodiments of the invention where the first and second outer film layers, and the inner film layers all have the same or at least substantially the same water vapour permeability, the structure may be used with a second building component such as a separate vapour control layer or a vapour check plaster board and may be installed with either of the first and second outer film layers facing the inside of the building.

The insulating air entrapment layers and water vapour permeable, air impermeable film layers sandwiched between the first and second outer film layers are preferably provided by alternating layers or groups of two or more layers of air and water vapour permeable, fibrous or filamentous or other polymeric, air permeable layered insulating materials such as polyester wadding. Such insulation materials are highly air-permeable.

To enhance reflection, and hence reduce heat loss by radiation, the air impermeable film layers, and especially both the first and second outer film layers may be metallised, preferably aluminised, either discretely or wholly over the planar surface of the film. If metallised over the whole planar surface of a vapour permeable monolithic film, the moisture vapour permeability may be reduced to unacceptable levels. With microporous films it is possible to provide a metallised reflective surface in such a way that the microporous structure, and hence the moisture vapour permeability, is preserved. Such coatings are known in the art.

Alternatively, an infra-red reflective material may be included within the film structure. Examples of the latter include fine powder metals or infra-red reflective minerals such as mica which may, for example, be extruded as part of the film formulation. An additional advantage of the use of reflective minerals, such as mica, is that they are available in their natural state or they may be obtained in coloured form to impart both colour and lustre to the base film.

From another aspect, the present invention resides in a thermal insulation system comprising: an air and liquid water impermeable, water vapour permeable first layer forming one of the outer layers of the insulation structure to face the inside of a building, and an air and liquid water impermeable, water vapour permeable second layer having a water vapour permeability at least that of the first layer on the opposing side and to face the outside of the building, and between the first and second outer layers are provided alternating layers or groups of two or more layers of air and water vapour permeable, fibrous or filamentous or other polymeric, air permeable materials and one or more water vapour permeable, air impermeable film layers.

The construction and arrangement of the layers enables the insulation structure to be flexible which provides advantages, such as the ability to be presented in roll form for ease of handling, storage, transport and laying, over the rigid structures referred to above in the discussion of the prior art.

The layers of the structure are advantageously bonded together without reducing the moisture vapour permeability of the structure.

The film layers forming the whole or component parts of the first and second outer layers and the inner alternating film layers may be composed of any suitable water vapour permeable, air and liquid water impermeable material. By water vapour permeable is meant any single film layer having a moisture vapour permeability in excess of 400g/m²/24 hours when measured at 23°C, 100%/15% relative humidity. Materials found to be suitable for the purposes of this invention are, without limitation, microporous polypropylene films, microporous or monolithic polyurethane or polyester ether films or cellulose derived films such as Cellophane® film or cellulose acetate films.

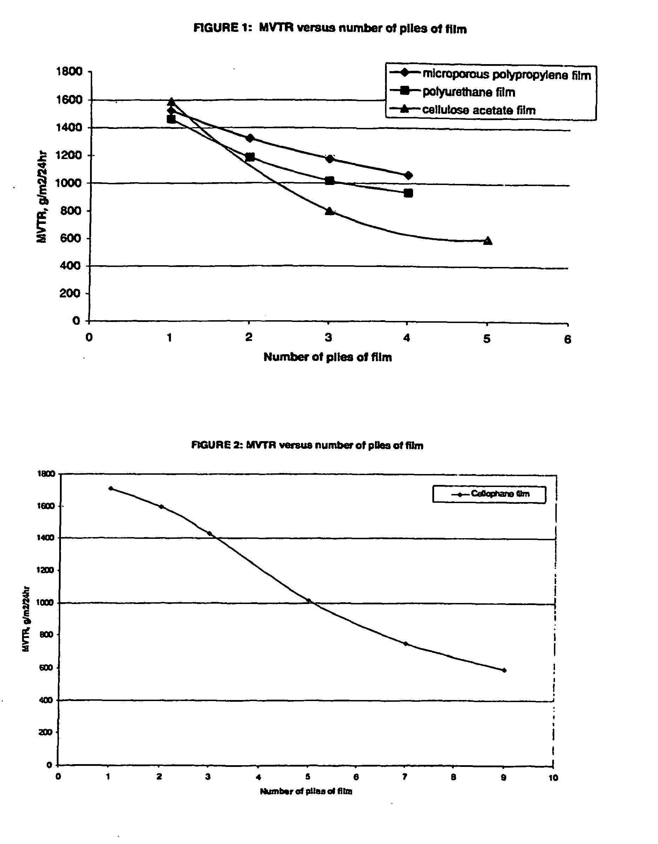

It has been found that the moisture vapour permeability of insulation structures incorporating multi-layers of such films still have a useful level of moisture vapour permeability. Moisture vapour permeability may be measured by any of a number of standard methods such as BS 7374:1990, BS 3177 : 1959 or EN ISO 12572 : 2001. All methods are based on maintaining a known difference in humidity across the opposing surfaces of the test sample at a constant temperature and measure the moisture passing from the high humidity side of the sample to the low per unit time. A particularly convenient means of measuring moisture vapour permeability is provided by the use of a Dansensor Lyssy Automatic Water Vapor Permeation Tester hereinafter referred to as the Lyssy. In this technique the test sample is held with a high moisture atmosphere on one side of the sample while an incoming dry air stream is passed over the opposing side of the sample. Measuring the electrical conductivity of the outgoing air stream in steady state conditions then provides a measure of moisture vapour permeability of the test sample. The moisture vapour permeability of increasing numbers of layers of moisture vapour permeable microporous polypropylene, monolithic polyurethane and cellulose acetate films have been measured using the Lyssy technique. The results, for test conditions 100%/15% RH, 23°C, are given in Figure 1 of the accompanying drawings.

Similar test data for Cellophane® film are given in Figure 2 of the accompanying drawings. Cellophane® film absorbs moisture resulting in an increasing moisture vapour permeability with increasing test time. The data for Figure 2 were therefore derived using the same test conditions as for Figure 1 above and from 4^{th} cycle on the Lyssy when the values had reached a level of stability.

There is no current standard relating to moisture vapour permeable and air impermeable insulation materials for the construction industry. However, even the lowest result presented in Figures 1 and 2, 593 g/m²/24 hours, is significantly in excess of the minimum regarded in the industry as defining a moisture vapour permeable material, referencing a related non-insulation product - permeable roofing underlay. For example, BS 5250 : 2003 "Code of practice for control of condensation in buildings", states that a material with a moisture vapour resistance of <0.6 MNsg⁻¹ can be regarded as a flexible breathable membrane. The test method here is not stated but is generally accepted as BS 3177 : 1959 (1995), or its equivalent in BS 7374 : 1990, which use test conditions 0%/75% RH, 25°C. The values obtained by these equivalent BS methods, are close to those obtained by the Lyssy technique under the above conditions. The limiting moisture vapour resistance value of <0.6 MNsg⁻¹ equates to a moisture vapour permeability of about >340 g/m²/24 hours, well below the minimum figure obtained in the above Lyssy values. In fact the moisture vapour permeability of as many as nine layers of cellulose acetate film still yielded a figure above this limiting value at 418g/m²/24 hours while the figure for Cellophane® film is higher still at 593g/m²/24 hours. It is therefore possible to use layers of such films as convection and infra-red radiation barriers in a multi-component, high efficiency, moisture vapour permeable insulation product. The moisture vapour permeable, essentially air impermeable films are interleaved with air permeable fibrous, filamentous or other polymeric air permeable materials which act to provide an insulating air layer trapped between the film layers.

It is advantageous with respect to the thermal insulation properties of the total thermal insulation structure, to treat the film layers with a reflective surface to decrease heat loss by radiation. The films may be coated with a thin layer of aluminium, for example, by plasma deposition or by any other known method. However, such treatment can have a negative impact upon the moisture vapour permeability of the film layer. A single layer of clear cellulose acetate film of monolithic structure had a moisture vapour permeability of almost 1600g/m²/24hr when measured using the Lyssy technique. The moisture vapour permeability of the same film, given a thin aluminised coating of the order of 40nm by plasma deposition, had reduced to only 315g/m²/24hr. The moisture vapour permeability of a microporous polypropylene film given the same aluminisation treatment was effectively unaffected.

Accordingly, from a further aspect, the present invention resides in a thermal insulation structure as defined hereinabove, in which at least one of the film layers is a metallised film layer or a film layer including infrared reflective particulate additives such as mica.

Applicant has found that a Cellophane® grade film including particulate mica additive and manufactured and sold by Innovia Films Limited makes a particularly advantageous film layer.

From a still further aspect, the present invention resides in a thermal insulation structure as defined hereinabove, in which at least one of the film layers is a film including infra-red reflective particulate additives which impart infra-red reflective properties to the film without impairing the moisture vapour permeability of the film.

Any fibrous or filamentous material, e.g. a fibrous or filamentous polymeric material which is thermoplastic or any other relatively bulky air permeable material may be used as the insulating air entrapment layer between the film layers. An example of a non-fibrous or non-filamentous air permeable material would be an open-cell foam. Such materials may be collectively referred to as "waddings". Preferably such waddings should be made of resilient materials capable of recovering substantially all of their original volume after being held in a compressed state for a prolonged period. Polyester fibre waddings are particularly good in this respect. Waddings of other fibres, including waddings made substantially of natural or reclaimed mixed fibres, have also been found to be suitable. The resilience of such mixed fibre waddings is improved by the inclusion of high resilience fibres such as polyester, or by the use of a resilient binder or other resilient additives, such as binder fibres, to the fibre mix. Other techniques known in the art, such as needling, may be employed to impart desirable characteristics, such as dimensional stability, to the fibre wadding. The interstices between the fibres of the wadding may also be used to trap other materials either to enhance the thermal properties of the insulation or to impart other desirable properties. An example of the latter is the inclusion of hydrophilic or superabsorbent materials in particulate or fibrous form to provide a temporary reservoir for the absorption of excess moisture in extreme high humidity conditions, the excess moisture absorbed into the hydrophilic or superabsorbent material being released into the atmosphere when ambient conditions allow.

The key variables in the specification of the wadding layers are their thickness i.e. the distance between any two adjacent film layers, and their bulk density. Other factors such as fibre titre i.e. the thickness of fibres, their morphology i.e. cross sectional geometry or whether they are hollow or solid, or cell density of a foam structure, are secondary to the above variables outside of air entrapment on the nano-scale. Waddings of thickness of less than 5mm provide too little barrier to conduction between adjacent film layers. Waddings of thickness greater than 10mm in contrast increase the opportunity for convection currents. It follows that the optimum wadding thickness is therefore between 5mm and 10mm. Thermal resistance also increases with increasing wadding density, but tends to a limiting value.

From yet another aspect, the present invention resides in a thermal insulation structure as defined hereinabove, in which at least one and preferably all of the insulating air entrapment layers is a wadding having a thickness in the range of from 5 mm to 10 mm.

The Applicant has found that a fibrous or filamentous polymeric material, such as polyester, is particularly advantageous for such an air entrapment layer and having a thickness in the range of about 5 mm to 10 mm.

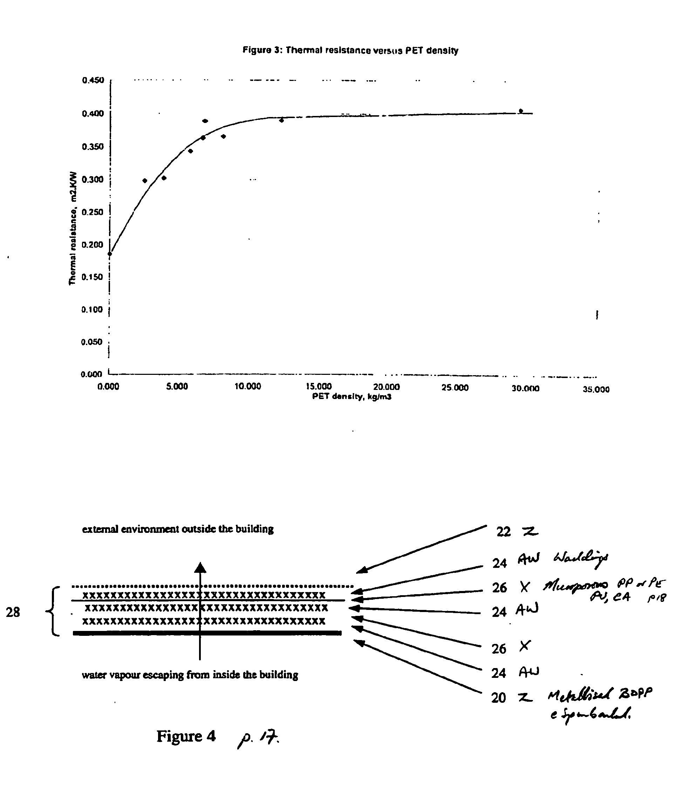

Figure 3 illustrates the relationship between the bulk density of a polyester (PET) wadding and thermal resistance. The measurements were conducted using an Alambeta Thermal Insulation test unit with the polyester fibre confined within a cylindrical test cell to maintain a constant test volume and distance between the testing plates of the Alambeta unit.

The optimum density of the polyester wadding lies between about 7 kg/m³ and 14 kg/m³. Below this range the thermal resistance values reduce significantly with decreasing density. Above this range there is little increase in thermal resistance with increasing amounts of polyester which is therefore both wasteful and expensive.

Accordingly, the present invention comprehends a thermal insulation structure as defined hereinabove, in which at least one of the insulating air entrapment layers is a wadding, e.g. of polyester, having a density of from about 7 kg/m³ to about 14 kg/m³.

The waddings and film layers may incorporate additives, such as hydrophobic additives, ultra-violet and heat stabilisation additives, pigments or flame retardants.

In those thermal insulating structures in which the inner air impermeable, water vapour permeable film layers are formed as coatings on the respective surfaces of the inner air and water vapour permeable insulating layers constituted by waddings made of fibres, whichever coating method if used, the coatings should be of sufficient depth that fibres of the waddings and acting as supports for the coatings should not penetrate the coatings in such a way as to cause air permeability.

Four embodiments of the invention which fulfil the first object of the invention will now be described, by way of example.

Figure 4 is a diagrammatic cross-sectional view of a multi-layer flexible vapour permeable thermal insulation structure. The thermal insulation structure 28 illustrated in Figure 4 includes first and second outer air and liquid water impermeable moisture vapour permeable outer film layers 20 and 22 respectively and a plurality of interleaved (alternating) inner air and water vapour permeable insulating air entrapment layers 24 (three as illustrated) and water vapour permeable, air impermeable film layers 26 (two as illustrated), sandwiched between the first and second outer air and liquid water impermeable, moisture vapour permeable outer film layers 20 and 22, the construction and arrangement of the layers being such as to control, in use, water vapour transmission through the thermal insulation structure. The one (second) outer film layer 22, has a moisture vapour permeability at least that of the other (first) outer film layer 20 and is preferably greater. As can be seen from Figure 2, the first outer film layer 20 faces the inside of the building which is the higher humidity side of the structure 28 and the second outer film layer 22 which in this embodiment is to have the higher moisture vapour permeability which is not less than or higher than that of the first outer film layer 20 on the opposing side face on the outside of the building, i.e. the lower humidity side of the structure 28 facing the environment, whereby the rate of moisture vapour escape (transmission) through the thermal insulation structure is controlled.

The insulating air entrapment layers 24 may be any of what have been termed previously as "waddings" and the film layers 26 may be any air impermeable, water vapour permeable material including microporous polypropylene or polyethylene films, microporous or monolithic polyurethane or polyester ether films or cellulose or cellulose acetate films.

In the second embodiment of the invention, the outer layer 20 facing the inside of the building is an aluminised monolithic film or monolithic film laminate and the outer layer 22 which faces the outside of the building is a laminate of an aluminised nonwoven fabric such as a spunbond and a microporous film intermittently bonded together. Such an aluminised laminate is disclosed in the Applicant's UK Patent GB2355430. In this embodiment, the outer layer 20 facing the inside of the building has a lower water vapour permeability than either the inner layers 26 or the opposing outer layer 22 and acts as a vapour control layer, limiting the amount of water vapour passing into and through the insulation structure 28. Thus the water vapour is generally kept above its dew point, reducing the likelihood of condensation forming within the insulation structure.

In the third embodiment of the invention, the outer film layers 20 and 22 and the inner film layers 26 all have the same or at least substantially the same water vapour permeability. This structure is therefore effectively symmetrical in that the rate of permeation of water vapour into the structure 28 is the same or at least substantially the same through either outer film layer 20 or 22. This would be especially useful for an insulation material being incorporated into a building structure which already had a second building component which limited the rate of passage of water vapour through the thermal insulation structure 28. Such a second building component might be a separate vapour control layer or a vapour check plaster board both of which are known in the art and are commercially available. In these circumstances the insulation structure 28 may be installed with either side 20 or 22 to the inside of the building. The insulation structure 28 may also be advantageously used to supplement other or existing insulation materials such as glass or mineral wool referred to here as traditional insulation materials. The insulation properties of the traditional insulation material, which may already be installed in a building for example, may be increased without increasing the thickness of the insulation to the extent that would be required by the use of additional layers of traditional insulation materials. It is anticipated that there are synergistic benefits to be gained by the combination of a multi-layer insulation of this invention with a traditional insulation such as glass or mineral fibre insulation. The multi-layer insulation would act to inhibit air flow through the thickness of a batt (layer) of glass or mineral fibre and hence increase its effective thermal insulation properties. Glass or mineral fibre insulation materials on the other hand have excellent fire retardant properties which would protect any polymeric multi-layer insulation of this invention installed behind it when viewed from inside a building, or when installed between layers of such traditional insulation.

In the fourth embodiment of the invention, the outer film layers 20 and 22 and the inner film layers 26 all comprise non-thermoplastic air impermeable and moisture vapour permeable infra-red reflective film layers laminated to a thermoplastic nonwoven support layer by means such intermittent adhesive bonding as in known in the art. In this embodiment the thermoplastic nonwoven support layer is wider than the non-thermoplastic film layer to which it is laminated so forming thermoplastic edge areas to the non-thermoplastic central film layer. Ultrasonic welding can then be achieved through the thermoplastic nonwoven edges close to the infrared reflective film layer after which slitting of the nonwoven edges beyond the weld lines is carried out. This leaves free spunbond along the edges which, when the insulation structure is placed between the roof rafters in a roof space, can frictionally engage with the rough surfaces of the roof rafters which helps retain the insulation structure in place. The wadding layers may similarly comprise polyester wadding of basis weight 70g/m² and a thickness of 6mm again giving a bulk density within the optimum range. By way of example, the air impermeable and moisture vapour permeable film layers comprise Cellophane® films incorporating infra-red reflective particulate additives such as mica laminated to a spunbonded polypropylene nonwoven fabric by intermittent adhesive means known in the art. The lamination of the film components of layers 20 and 22 to the supporting fabric layers does not detract from their reflective performance and yet provides them with additional tensile and tear strength properties.

Fifth and sixth impermeable insulation structures falling outside the scope of the invention will now be described for illustration.

In the fifth structure, the outer layers 20 and 22 and the inner film layers 26 all comprise air and moisture vapour impermeable film infra-red reflective film layers. The insulating air entrapment layers each comprises a polyester wadding of basis weight 70g/m² and a thickness of 6mm. This equates to a bulk density of 11.7kg/m³, well within the optimum range referred to previously in conjunction with Figure 3. The air and moisture vapour impermeable film layers comprise highly reflective metallised polypropylene films. The outer layers, 20, preferably consist of a highly reflective polypropylene film metallised by plasma coating and laminated to a second, clear thermoplastic film so as to encapsulate the metal coating. The encapsulation of the metallised coating provides a high degree of protection against weathering, oxidation and the effects of surface water. The inner film layers, 22 may be simple metallised film layers since the metal coatings of these layers are protected by virtue of being positioned inside the outer film layers 20.

In the sixth structure, the outer layers 20 and 22 and the inner film layers 26 all comprise air and moisture vapour impermeable infra-red reflective film layers laminated to a nonwoven support layer. The wadding layers may similarly comprise polyester wadding of basis weight 70g/m² and a thickness of 6mm again giving a bulk density within the optimum range. The air and moisture vapour impermeable film layers comprise highly reflective metallised polypropylene films which may be laminated, by way of example, by intermittent point or pattern thermal bonding to a spunbonded polypropylene nonwoven fabric by means known in the art. As in the prior structure, the outer layers 20 comprise metallised film laminated on the coated side so as to provide protection for the coated reflective layer. The lamination of the film components of layers 20 and 22 to the supporting fabric layer does not detract from their reflective performance and yet provides them with additional tensile and tear strength properties.

The thermal insulation properties of such structures have been tested according to the principles of the guarded hot plate method for the determination of thermal resistance, BS EN 12667 : 2001. Data for structures according to structure 5 are given in Table 1 for increasing numbers of layers of polyester wadding from 2 layers to 5 layers.

| **Table 1: Thermal test data** | | | |
|---|---|---|---|
| **Insulation structures in accordance with structure 5** | | | |
| **No. layers wadding** | **Loft (mm)** | **Thermal conductivity** (W/mK) | **Thermal Resistance** (m²K/W) |
| 2 | 12 | 0.0336 | 0.3571 |
| 3 | 18 | 0.0325 | 0.5538 |
| 4 | 25 | 0.0323 | 0.7740 |
| 5 | 30 | 0.0321 | 0.9346 |

However, this method of testing is thought not to take into account the all the attributes of a thin multi-layer insulation product and other methods have been sought and published by manufacturers of such materials. The following data in Table 2 show a comparison of the thermal properties of an insulation structure comprising five wadding layers, and hence six film layers, of the type described in structure 5 and tested according to the above test method, BS EN 12667 : 2001, but in this test the insulation thickness was confined to 25mm. The data are similar to those in Table 1 for a structure 25mm thick. Table 2 also shows the same structure tested on the same apparatus but with a 25mm air gap above and below. The apparent thermal resistance and the thermal conductivity values by the method incorporating air spaces demonstrates the improvement in thermal insulation values obtained by this change in test methodology.

| **Table 2: Thermal test data** | | | |
|---|---|---|---|
| **Insulation structures in accordance with structure 5** | | | |
| **No. layers wadding** | **Loft (mm)** | **Thermal conductivity** (W/mK) | **Thermal Resistance** (m²K/W) |
| 5 | 25 no air gap | 0.032 | 0.785 |
| 5 | 25 2 x 25mm air gaps | 0.017 | 1.49 |

An advantage of all the aspects the invention provided by the air impermeability of the film layers is that air leakages from the insulation structures of the invention when installed, e.g. in buildings, will be minimised.

With a view to avoiding or at least substantially reducing thermal bridging, the layers of any of the thermal insulation structures defined or described hereinabove are advantageously and preferably held together along the long edges of the insulation by any means which does not perforate or puncture the first and second outer layers or the insulation structure as a whole. By the long edges of the insulation structure is meant the edges in the machine direction of the insulation structure as it is manufactured. By way of example, the structure may be held together at, or close to, the edges by adhesive bonding using any suitable adhesive bonding system known in the art. Of the various adhesive means available, hot melt adhesive bonding is preferred to water or solvent based adhesive bonding since it provides an effectively instant bond and obviates the need for water or solvent removal. Alternatively the structure may be held together at, or close to, its edges by heat welding either in the form of direct heat brought in direct contact with the materials to be welded, or preferably by means of ultrasonic welding.

Accordingly, from a further aspect, the invention resides in a laminate in the form of a thermal insulation structure as defined or described hereinabove, in which the laminate layers are held together along the long edges of the laminate by means which does not perforate or puncture the laminate layers, or first and second outer film layers of the insulation structure, as a whole.

This further aspect of the invention also comprehends a method of making a laminate in the form of a thermal insulation structure as defined or described hereinabove, which method includes holding the laminate layers together along the long edges of the laminate being formed by means which does not perforate or puncture the laminate layers, or first and second outer film layers of the insulation structure, as a whole.

In the case of heat welding, e.g. by means of a thermobonding embossed calendar, the holding together may take place though portions of the two outer layers which overhang or extend peripherally beyond the other layers of the laminate in cases where the material of the laminate layers are not compatible. Alternatively, ultrasonic bonding is preferred as there no requirement for the materials of the laminate to be compatible which is the case with the thermal insulation structures of the invention. Thus, with ultrasonic bonding/lamination, the need for any overhang in the outer layers can be avoided.

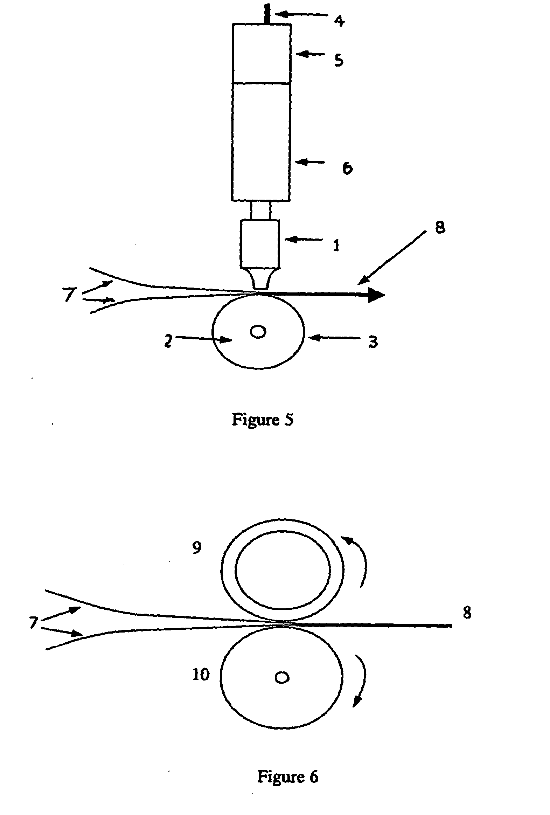

Ultrasonic welding is well known in the art. The principle of the technique is that an applicator vibrating at ultrasonic frequencies and known as the "horn" or "sonotrode", (hereinafter referred to collectively for convenience as a "horn"), is caused to vibrate against the material or materials to be bonded held against a supporting surface, the "anvil". The ultrasonic vibrations cause localised frictional heating which can effect localised melting and welding with any thermoplastic components being treated. When welding flexible materials such as thermoplastic fabrics and films, a method commonly employed is to pass the materials to be welded together between a fixed horn and a rotary anvil. The rotary anvil may have a smooth surface in the long (machine) direction of the welding process, in which case the weld will take the form of a continuous line or lines, or the rotary anvil may be designed such that it carries a raised pattern on its surface, in which case the resultant weld will be a pattern of welded areas corresponding to the raised pattern on the surface of the rotary anvil. The equipment to conduct such continuous welding of flexible materials is represented diagrammatically, by way of example in Figure 5 of the accompanying drawings.

The electrical input 4 causes oscillations to be generated by the transducer 5. These oscillations are mechanically amplified by the booster 6 which powers the horn 1. Pressure between the horn,1, and the surface, 3, which may be smooth or may carry a raised pattern, of the anvil roll, 2, welds the incoming materials, 7, to produce the welded composite, 8. However, the use of this technology in bonding relatively bulky structures such as those used for thermal insulation is problematic since a bulky material has to be passed through a tight nip under the fixed horn, 1, causing the materials either to catch on the fixed horn or, with multi-layered materials, for a speed differential to build up between the various component layers due to the different frictional surfaces of the fixed horn, 1, and the rotating anvil 2.

A commercially available structure, MULTIPRO^{®} TS250 (Actis UK Limited), avoids this problem by utilising spaced-apart, approximately circular ultrasonic welds which are consistent with a technique of intermittent bonding or method of production in which the ultrasonic weld is stamped using a fixed horn brought into contact with the materials to be welded and then lifted from their surface. However, this is a slow processing technique and does not have the advantages of a continuous welding process. By a continuous welding process is meant a process in which the materials to be welded pass continuously through the ultrasonic welding section without any "stopping and starting" whether or not the welding pattern is continuous or intermittent.

An alternative method of ultrasonic bonding uses a rotary horn. In this method the horn has a circular cross section and is caused to vibrate ultrasonically whilst rotating. The vibrations may be in the direction of the transducer, parallel to the planar surface of the materials to be welded, or preferably may be transverse to the plane of the materials being welded. Ultrasonic horns which work on the latter principle are described in French patents 2 677 049 and 2 792 575 (both of CERA France). Horns of the type described in the Cera patents are circular in cross section and may be used for producing a continuous welded line or lines in the machine direction or, if the anvil is designed to carry a raised pattern on its surface, can produce welds of any desired pattern corresponding to the raised patterned areas on the surface of the anvil roll. This technique has the advantage over a fixed horn design in that the materials to be welded are fed equally through the nip between the horn and the anvil since both are rotating. A rotary horn welding unit is illustrated diagrammatically in Figure 6 of the drawings.

The rotary horn, 9, forms an in-running nip with the rotary anvil, 10, so that the materials, 7, are able to pass through the nip without hindrance. It is theoretically possible to weld layered materials to produce relatively bulky structures such as those which are the subject of this patent specification using such a rotary ultrasonic technique with a patterned anvil roll. However, there are two difficulties to be overcome. Firstly, to avoid introducing creasing in any of the component layers an intermittent weld rather than a continuous weld is preferred. This allows some movement in and between adjacent layers so that a localised excess of one component relative to another, resulting in the formation of a crease, is not allowed to build up. The space between the welded bonds has to be sufficient to allow such compensatory movement to take place. Secondly, as the bulk of the structure to be welded increases i.e. the thickness of the total structure increases, the pattern on the anvil roll has to be raised further from the "valleys" between the raised surfaces of the pattern. This is due to ultrasonic power loss caused by energy being absorbed by material trapped in the valleys between the raised patterned areas and to allow the raised surface to form a sufficiently close nip with the anvil roll that welding can occur in that area. Such deep patterning is difficult and expensive to achieve on a wide width anvil roll. If the pattern in the anvil roll is damaged in any way it is expensive and difficult to repair. It is possible to design a system which utilises narrow width anvil rolls. However, while such narrow width anvil rolls could be patterned as desired and would be cheaper to make and more convenient to repair or change, each anvil roll would have to be located directly under its respective ultrasonic unit. Changing width with such an arrangement would therefore be difficult.

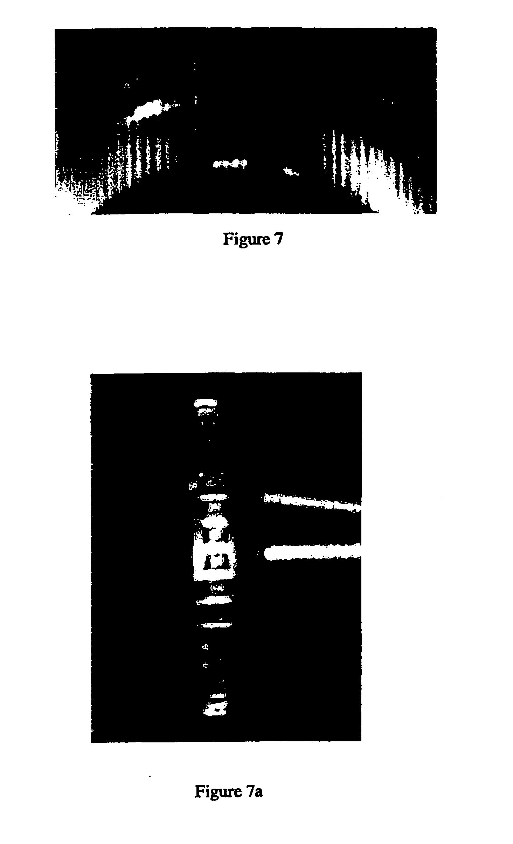

A particularly advantageous method of ultrasonic welding has therefore been developed in which the welding pattern is incorporated onto the rotary horn of the ultrasonic unit. An arcuate portion of a rotary horn and a side view of the same rotary horn, each bearing a simple "dash" or intermittent line welding pattern, are illustrated by way of example in Figures 7 and 7a below. Other weld line lengths, inter-weld spacing or patterns are possible.

Ultrasonic bonding also has the advantage that it is able to form an adequate bond between different thermoplastic materials. Thus, by way of example, it is possible to bond films formed from polyolefinic materials such as polyethylene or polypropylene or blends or copolymers of polyethylene and polypropylene to the polyester wadding of the insulating air entrapment layers. Insulating air entrapment layers of wadding comprising non-thermoplastic fibres blended with thermoplastic fibres may also be bonded in this way. It has proved possible to ultrasonically bond alternating layers of polypropylene films with wadding comprising 80% reclaimed wool and 20% mixed synthetic fibres, for example, so that the insulation can comprise a high percentage of recycled materials, especially if recycled polymer is also used for the production of the film layers. The term "thermoplastic wadding" is used hereinafter to mean any wadding comprising wholly thermoplastic material or any wadding comprising non-thermoplastic material blended or mixed with sufficient thermoplastic material that it is capable of forming an adequate thermoplastic bond to either itself or to another thermoplastic material using ultrasonic bonding means. Thus it is possible to bond the constituent film and wadding layers close to the edge of the insulation product so that it effectively has no cold bridges over the planar surface of the insulation. It is difficult to bond materials together so close to the edge of the insulation material when using prior art bonded means such as sewing due to the difficulties of materials alignment with the sewing head and so the poor strength bond arising from a line of sewing perforations close to the edge of the material.

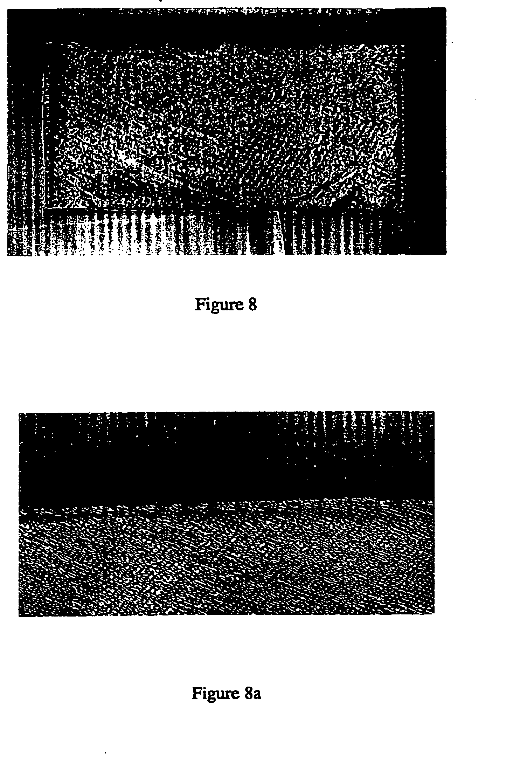

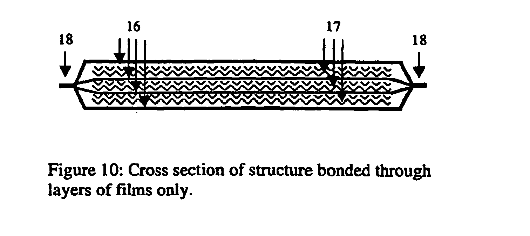

A photograph of a sample of a thermal insulating structure, in plan view, of which the insulating air entrapment layers and film layers have been laminated by the rotary horn of Figures 7 and 7a is shown in Figure 8 of the drawings. As can be seen from Figure 8, there are intermittent patterned welds or bonds extending along opposite sides respectively of the insulation structure. The patterned welds or bonds bond all the film layers only as explained with reference to, and as shown in Figure 10. One of the patterned welds or bonds is more clearly visible in the enlarged detail view of Figure 8a.

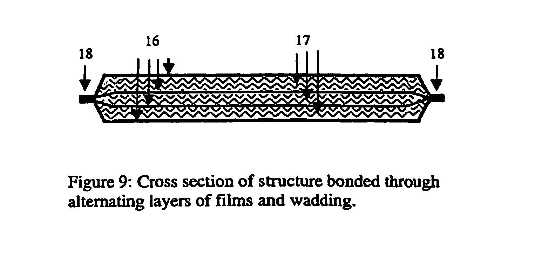

The position of the rotary ultrasonic welds of the thermal insulating structure is illustrated diagramatically in cross section in Figure 9 of the drawings to which reference will now be made.

The infra-red reflective, moisture vapour permeable air impermeable film layers 16 or alternatively the infra-red reflective moisture vapour and air impermeable film layers 16 and the thermoplastic wadding layers 17 are welded along the two machine direction edges of the insulation product at points close to the edges 18. The inclusion of the thermoplastic wadding with the film in the welded seam makes a dimensionally stable product. However the high mass to be welded by this technique means that the bonding process is slower than if the film layers only are bonded.

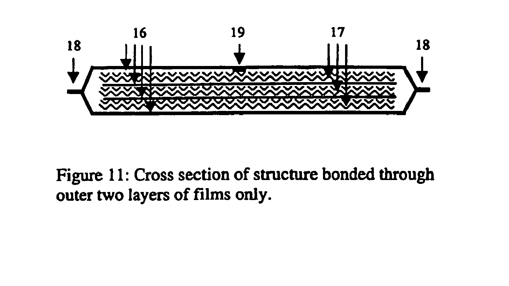

It has been found that if the widths of the wadding layers are narrower than the film layers it is possible to manufacture a functional thermal insulation structure which is welded together either through all the film layers, as illustrated in Figure 10 of the drawings or alternatively just by welding the two outer layers as illustrated in Figure 11 of the drawings with no wadding layers included in the welded seam.

In Figures 10 and 11, the wadding layers 17, do not form part of the welded seams 18. This has the advantage of considerably increasing the process speed when using the rotary ultrasonic welding. By way of example, a typical insulation structure of this invention comprising six reflective film layers and five insulating wadding layers processed through the rotary ultrasonic units at between 5m/min and 10m/min when including the wadding layers within the welded seams, as illustrated in Figure 9. In contrast, when bonding through the film layers only, as illustrated in Figures 10 or 11, the process speed can be increased to at least 15m/min, an increase of at least 50%.

Figure 11 also illustrates an optional adhesive bonding point, 19, which helps product stability, especially if the insulation is greater than 500mm wide or if the insulation is to be cut along the machine direction for installation. It will be appreciated that adhesive bonding points 19 may be provided in any of the structures illustrated in Figures 8, 9 or 10 and between any of all of the interfaces between the component layers and that such adhesive bonding points do not result in "thermal bridging".

The various component layers comprising the insulation system may also need to be bonded together to improve handling and stabilisation at intervals across its width, referred to here as intermediate bonding or intermediate stabilisation. Narrower widths of insulation, for example up to 500mm wide may not require such intermediate bonding, while wider widths may benefit from such intermediate bonding. In Europe, 1200mm - 1600mm is a commonly available width range for such multi-layer insulation materials and intermediate bonding in these products is often provided by sewing or ultrasonically welded areas. These have the disadvantage of acting as "thermal bridges", reducing the thermal insulation efficiency of the product. Intermediate bonding is therefore provided in this aspect of the present invention by the application of spaced apart adhesive between adjacent component layers using any of the adhesive techniques which are well known in the art.

The preferred method of intermediate bonding is by the application of a thin hot-melt adhesive line positioned between adjacent component layers in the long direction of the product i.e. in the machine direction as the product is being manufactured. The line may be continuous or intermittent or may be at intervals so as to effectively form spaced apart point bonds. The areas in direct contact with adhesive between the ultra-sonically bonded edges should be kept to a minimum as should the quantity of adhesive applied so that the total adhesive area is sufficiently low as a percentage of the total planar area of the insulation that the moisture vapour permeability of the structure as a whole is unimpaired by the adhesive bonding points. The thickness of the insulation at these intermediate adhesively bonded areas should be substantially the same as the whole of the un-bonded areas of the insulation system so as to preserve the thermal insulation properties in the intermediate bonded areas.

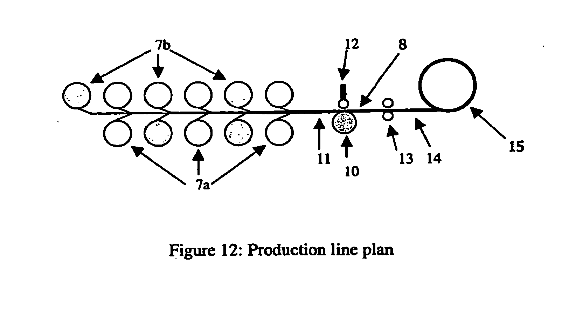

A diagrammatic illustration of a production line is illustrated in Figure 12 of the drawings, to which reference will now be made.

Rolls of film 7a are unwound so as to provide film layers alternating with insulating air entrapment wadding layers from rolls 7b, until the required number of alternating layers is achieved. The combined, unbonded layers of alternating film and wadding layers, 11, are passed under a patterned rotary ultrasonic bonding unit 12 acting upon a smooth anvil roller 10 to bond both edges. The edges of the bonded insulation structure 8 are trimmed outside of, and as close to, the bonding or welding line as possible at the slitting unit 13 before the slit, bonded multi-layer insulation structure 14 is wound up as a finished roll 15. If adhesive is required to stabilise the insulation layers between the two ultrasonically bonded edges, then this can be applied by any suitable means known in the art between the in-feed rolls 7a and 7b.

The insulation structure may be presented in roll form for convenience of storage, handling, transport and laying. If the insulation structure is moisture vapour permeable and with one outer film layer more highly moisture vapour permeable than the other outer film layer, the more highly moisture vapour permeable side of the insulation system is preferably wound to the inside of the roll 15 so that is presented to face the outside of a building when unwound.

A further advantage of providing an insulation structure (air and moisture vapour permeable) comprising alternating flexible film layers and flexible, compressible wadding layers is that the finished, wrapped product volume can be reduced by compression or vacuum for ease of storage and handling. The insulation has advantages in this regard over non-compressible insulation materials such as rigid board insulation and over compressible multi-layer insulation material which contain component layers, such as foam layers, especially closed cell foam layers, which are not as compressible as fibrous wadding layers. Although the film layers of this invention are air impermeable and enclose the wadding layers, it has been found that the air can easily escape from within the product upon compression since the bonded or welded seams along the edges of the product are intermittent and so do not present a continuous barrier.

Referring now Tables 3 and 4, these show a comparison of the relative diameters of vacuum packed multi-layer insulation materials which illustrates the advantage of compressible waddings over foam materials. Two insulation products of this invention made with different grades of polyester wadding interleaved with six film layers such that one insulation material had a total nominal thickness of 50mm and the other had a total nominal thickness of 30mm were compared to two alternative insulation products, Actis Tri-iso Super 9 and Yorkshire Building Products Superquilt 14. The latter two products comprise six layers of impermeable reflective films interleaved with two polyester wadding layers and six thin foam layers. The same area of each insulation product, 500mm x 6m, were rolled up and put into heavy duty polyethylene bags. Suction was applied to each bag using an industrial vacuum cleaner until no further compression of the packed product occurred. The circumference of each product before and after vacuum packing was measured. The results are given in Table 3 and show that the greatest percentage reduction was achieved by the products of this invention.

**Table 3**

| **Table 3: Comparison of reduction in pack size on vacuum packing** | | | |
|---|---|---|---|
| **Product** | **Circumference before vacuum packing (mm)** | **Circumference after vacuum packing (mm)** | **Percentage reduction** |
| 50mm thick insulation of this invention | 1674 | 860 | 49 |
| 30mm thick insulation of this invention | 1130 | 757 | 33 |
| Actis Tri-iso Super 9 | 1290 | 950 | 26 |
| YBS Superquilt 14 | 1260 | 950 | 25 |

An advantage of wadding comprising polyester fibres is that they have good resilience properties and so show good recovery on release after compression.

Table 4 shows the compression and recovery data for ten layers of a 70g/m² polyester wadding of this invention after compression under various loads for 24 hours. The recovery after 24 hours relaxation was 90% of the original loft or thickness of the wadding layers.

**Table 4**

| **Table 4: Compression and recovery test on 70g/m² polyester wadding** | | |
|---|---|---|
| **Compression** | **Loft (mm)** | **Percentage of original loft** |
| No load (original loft) | 56 | |
| 0.9kg | 45 | 80 |
| 2.3kg | 38 | 67 |
| 4.5kg | 34 | 60 |
| 6.8kg | 24 | 43 |
| 9.1kg | 22 | 39 |
| **Recovery** | | |
| Initial | 45 | 80 |
| 1 hour relaxation | 50 | 88 |
| 24 hours relaxation | 51 | 90 |

The invention comprehends any of the thermal insulation structures defined or described hereinabove which are capable of being significantly compressed to a level dependent upon its initial thickness and yet, when the compression is removed, the wadding layers can recover substantially their original loft.

It should be appreciated that various modifications may be made to the insulating structures described herein without departing from the scope of the various aspects of the invention. For example, the layers of the insulating structure may be made of any other suitable materials consistent with achieving control of moisture vapour transmission through the air and moisture vapour permeable insulating structures whilst retaining sufficient flexibility and level of insulation.

## Claims

1. A thermal insulation structure including a plurality of inner air and water vapour permeable insulating layers which entrap air and a water vapour permeable, at least substantially air impermeable film layer separating two said water vapour permeable insulating layers, the inner layers being sandwiched between first and second outer air and liquid water impermeable, water vapour permeable outer film layers, the construction and arrangement of the layers being such as to control, in use, water vapour transmission through the thermal insulation structure.

2. A thermal insulation structure including a plurality of alternating air and water vapour permeable insulating layers which entrap air and water vapour permeable air impermeable film layers, with first and second outer ones of the film layers being liquid impermeable and sandwiching inner ones of the insulating and film layers therebetween, the construction and arrangement of the insulating and film layers being such as to control, in use, water vapour transmission through the thermal insulation structure.

3. A thermal insulation structure as claimed in claim 1 or claim 2, wherein one of the outer film layers has a lower water vapour permeability than that of the inner layers and the other outer layer in order to control, in use, water vapour transmission through the thermal insulation structure.

4. A thermal insulation structure as claimed in claim 1 or claim 2, wherein the inner film layers have a moisture vapour permeability equal to or greater than the moisture vapour permeability of the first outer film layer to face what would be the higher humidity side of the insulation structure in use and which would correspond to the inside of a building.

5. A thermal insulation structure as claimed in claim 1 or claim 2, wherein the second outer film layer to face the lower humidity side of the structure in use and which would correspond to the outside of the building, has a moisture vapour permeability equal to or greater than that of the inner film layers.

6. A thermal insulation structure as claimed in claim 1 or claim 2, wherein the outermost, or topmost if in a roof structure, of the two outer film layers has a moisture vapour permeability not less than that of the any other film component of the structure.

7. A thermal insulation structure as claimed in claim 1 or claim 2, wherein the first and second outer film layers, and the inner film layers all have the same or at least substantially the same water vapour permeability, for use with a second building component for installation with either of the first and second outer film layers facing the inside of the building.

8. A thermal insulation structure as claimed in any one of claims 1 to 7, wherein the inner insulating air entrapment layers and water vapour permeable air impermeable film layers are in the form of separate layers which are interleaved.

9. A thermal insulation structure as claimed in any one of claims 1 to 7, wherein the air impermeable water vapour permeable film layers are formed as coatings on the respective surfaces of the insulating air entrapment layers.

10. A thermal insulation structure as claimed in any one of claims 1 to 9, wherein there are five alternating layers with there being three inner layers including two said insulating layers which entrap air separated by one said water vapour permeable air impermeable film layer and being sandwiched between two said outer water vapour permeable and air and liquid impermeable outer film layers.

11. A thermal insulation structure as claimed in any one of claims 1 to 10, wherein any of the film layers may incorporate one or more films, or constitute a film composite with a spunbond layer adhesively intermittently bonded to a film whether separating the insulating air entrapment layers or constituting the outer film layers.

12. A thermal insulation structure as claimed in any one of claims 1 to 11, wherein the first and second outer film layers or the air impermeable film layers comprise moisture vapour permeable monolithic films, moisture vapour permeable microporous films or a combination of moisture vapour permeable monolithic and moisture vapour permeable microporous films.

13. A thermal insulation structure as claimed in any one of claims 1 to 12, wherein the air impermeable first and second outer film layers or the air impermeable film layers are infrared reflective.

14. A thermal insulation structure as claimed in claim 13, wherein the first and second outer film layers or the air impermeable film layers are metallised, preferably aluminised, to make the first and second outer film layers or air impermeable film layers infrared reflective.

15. A thermal insulation structure as claimed in claim 13, and including an infra-red reflective material within the structure of the film layers to make the first and second outer film layers or air impermeable film layers infrared reflective.

16. A thermal insulation structure as claimed in claim 15, wherein the infra-red reflective material is a fine powder metal or a mineral in particulate form.

17. A thermal insulation structure as claimed in claim 16, wherein the infra-red reflective mineral, such as mica, is of coloured form to impart both colour and lustre to the film.

18. A thermal insulation structure as claimed in claim 16 or claim 17, wherein the or each of the first and second outer film layers or the air impermeable film layers comprises a cellulose acetate film.

19. A thermal insulation structure as claimed in any one of claims 1 to 18, wherein at least one and preferably all of the insulating air entrapment layers is/are of a fibrous or filamentous material, each of which constitutes a wadding.

20. A thermal insulation structure as claimed in claim 19, wherein the fibres or filaments of the wadding impart resilience to the wadding.

21. A thermal insulation structure as claimed in claim 20, wherein the fibres or filaments of the wadding are mixed to improve the resilience of the wadding by the inclusion of high resilience fibres such as a polyester, or by the use of a resilient binder or other resilient additives, such as binder fibres or filaments, to the fibre or filament mix.

22. A thermal insulation structure as claimed in any one of claims 19 to 21, wherein the wadding is dimensionally stable.

23. A thermal insulation structure as claimed in any one of claims 19 to 22, wherein materials that enhance the thermal properties of the insulation are trapped in interstices between the fibres or filaments of the wadding.

24. A thermal insulation structure as claimed in any one of claims 19 to 23, wherein the wadding constituting at least one and preferably all of the insulating air entrapment layers has a thickness in the range of from 5 mm to 10 mm.

25. A thermal insulation structure as claimed in any one of claims 19 to 24, wherein the wadding constituting at least one of the insulating air entrapment layers has a density of from 7 kg/m³ to 14 kg/m³.

26. A thermal insulation structure as claimed in claim 25, wherein all wadding constituting the insulating air entrapment layers has a density of from 7 kg/m³ to 14 kg/m³.

27. A thermal insulation structure as claimed in any one of claims 19 to 26, wherein the insulating air entrapment layers are of at least substantially continuous, planar form.

28. A thermal insulation structure as claimed in any one of claims 19 to 26, wherein the insulating air entrapment layers have oppositely facing surfaces which are at least substantially continuous and planar.

29. A thermal insulation structure as claimed in any one of claims 1 to 28, wherein the outer film layers and the inner film layers all comprise non-thermoplastic air impermeable and moisture vapour permeable film layers laminated to a thermoplastic nonwoven support layer which is wider than the non-thermoplastic film layer to which it is laminated, preferably by intermittent adhesive bonding, so forming thermoplastic edge areas to the non-thermoplastic central film layer which are welded through the thermoplastic nonwoven edges close to the inner film layers.

30. A thermal insulation structure as claimed in claim 29, and having slit nonwoven edges beyond the weld lines, leaving free spunbond along the edges which, when the insulation structure is placed between the roof rafters in a roof space, can frictionally engage with rough surfaces of the roof rafters to help retain the insulation structure in place.

31. A thermal insulation structure as claimed in any one of claims 1 to 30, and having oppositely facing side edges along which at least the first and second outer layers are laminated without there being any perforations or punctures in the inner and outer layers and insulation structure as a whole.

32. A thermal insulation structure as claimed in any one of claims 1 to 30 and held together along oppositely facing side edges thereof without there being any perforations or punctures in the inner and outer layers and insulation structure as a whole.

33. A thermal insulation structure as claimed in claim 31 or claim 32, and held together at, or close to, the oppositely facing side edges by adhesive bonding.

34. A thermal insulation structure as claimed in claim 31 or claim 32, and held together at, or close to, its oppositely facing side edges by heat welding.

35. A thermal insulation structure as claimed in claim 34, wherein the outer and inner layers are of compatible materials and wherein the heat welding is by way of a thermobonding embossed calendar through the outer and inner layers.

36. A thermal insulation structure as claimed in claim 34, wherein the outer and inner layers are of incompatible materials and wherein the heat welding is by way of a thermo bonding embossed calendar through portions of the two outer layers which overhang or extend peripherally beyond the inner layers.

37. A thermal insulation structure as claimed in claim 34, wherein the heat welding is ultrasonic welding.

38. A thermal insulation structure as claimed in claim 37, including intermittent patterned welds or bonds extending along opposite side edges of the insulation structure.

39. A method of manufacturing a thermal insulation structure as claimed in any of one of claims 1 to 38, including bonding at least the first and second outer layers together along oppositely facing side edges of the insulation structure without causing any perforations or punctures in the inner and outer layers and insulation structure as a whole.

40. A method as claimed in claim 39, wherein at least the outer layers are bonded together at, or close to, the oppositely facing side edges of the insulation structure by adhesive bonding.

41. A method as claimed in claim 40, wherein the adhesive bonding is hot melt adhesive bonding.

42. A method as claimed in claim 39, wherein at least the outer layers are bonded together at, or close to, the oppositely facing side edges of the insulation structure by heat welding.

43. A method as claimed in claim 42, wherein the heat welding is in the form of direct heat which is brought in direct contact with the outer layers.

44. A method as claimed in claim 42, wherein the outer and inner layers are of compatible materials and wherein the heat welding is by way of a thermobonding embossed calendar through the outer and inner layers.

45. A method as claimed in claim 42, wherein the outer and inner layers are of incompatible materials and wherein the heat welding is by way of a thermobonding embossed calendar through portions of the two outer layers which overhang or extend peripherally beyond the inner layers.

46. A method as claimed in claim 42, wherein the heat welding is ultrasonic welding.

47. A method as claimed in claim 46, wherein the ultrasonic welding is carried out using an ultrasonic applicator, such as a rotary horn, bearing a welding pattern.

48. A method as claimed in claim 47, wherein the ultrasonic applicator, such as a rotary horn bearing the welding pattern, cooperates with a plain, smooth-surfaced anvil roll.

49. A thermal insulation structure as claimed in any one of claims 19 to 38, and which is capable of being significantly compressed to a level dependent upon its initial thickness and yet, when the compression is removed, the wadding layers can recover substantially their original loft.

50. A thermal insulation structure as claimed in any one of claims 1 to 38 or 49, wherein the layers are constructed and arranged to enable the insulation structure to be flexible and thereby enable the insulation structure to be presented in roll form for ease of handling, storage, transport and laying.

51. Use of a thermal insulation structure as claimed in any one of claims 1 to 38, 49 or 50 as a roofing underlay in a building.

## Patentansprüche

1. Wärmeisolationsstruktur mit mehreren inneren luft- und wasserdampfdurchlässigen Isolierschichten, die Luft einfangen, und einer wasserdampfdurchlässigen, mindestens im Wesentlichen luftundurchlässigen Filmschicht, die die zwei wasserdampfdurchlässigen Isolierschichten trennt, wobei die inneren Schichten zwischen ersten und zweiten äußeren luft- und flüssigwasserundurchlässigen, wasserdampfdurchlässigen äußeren Filmschichten geschichtet sind, wobei der Aufbau und die Anordnung der Schichten derart sind, dass bei Gebrauch die Wasserdampfübertragung durch die Wärmeisolationsstruktur gesteuert wird.

2. Wärmeisolationsstruktur mit mehreren abwechselnden luft- und wasserdampfdurchlässigen Isolierschichten, die Luft einfangen, und wasserdampfdurchlässigen luftundurchlässigen Filmschichten, wobei die ersten und zweiten äußeren der Filmschichten flüssigkeitsundurchlässig sind und innere der Isolier- und Filmschichten dazwischen geschichtet sind, wobei der Aufbau und die Anordnung der Isolier- und Filmschichten derart sind, dass bei Gebrauch die Wasserdampfübertragung durch die Wärmeisolationsstruktur gesteuert wird.

3. Wärmeisolationsstruktur nach Anspruch 1 oder 2, wobei eine der äußeren Filmschichten eine geringere Wasserdampfdurchlässigkeit als die der inneren Schichten und der anderen äußeren Schicht aufweist, um bei Gebrauch die Wasserdampfübertragung durch die Wärmeisolationsstruktur zu steuern.

4. Wärmeisolationsstruktur nach Anspruch 1 oder 2, wobei die inneren Filmschichten eine Feuchtigkeitsdampfdurchlässigkeit aufweisen, die gleich oder größer ist als die Feuchtigkeitsdurchlässigkeit der ersten äußeren Filmschicht, die der Seite zugewandt ist, die bei Gebrauch die Seite der Isolationsstruktur mit der höheren Feuchtigkeit wäre und die der Innenseite eines Gebäudes entsprechen würde.

5. Wärmeisolationsstruktur nach Anspruch 1 oder 2, wobei die zweite äußere Filmschicht, die bei Gebrauch der Seite der Struktur mit geringerer Feuchtigkeit zugewandt ist und die der Außenseite des Gebäudes entsprechen würde, eine Feuchtigkeitsdampfdurchlässigkeit aufweist, die gleich oder größer ist als die der inneren Filmschichten.

6. Wärmeisolationsstruktur nach Anspruch 1 oder 2, wobei die äußerste oder bei einer Dachstruktur die oberste der beiden äußeren Filmschichten eine Feuchtigkeitsdampfdurchlässigkeit aufweist, die nicht geringer ist als die der beliebigen anderen Filmkomponente der Struktur.

7. Wärmeisolationsstruktur nach Anspruch 1 oder 2, wobei die ersten und zweiten äußeren Filmschichten und die inneren Filmschichten alle die gleiche oder im Wesentlichen die gleiche Wasserdampfdurchlässigkeit aufweisen, zur Verwendung mit einer zweiten Gebäudekomponente zur Installation mit der ersten oder zweiten äußeren Filmschicht, die der Innenseite des Gebäudes zugewandt ist.

8. Wärmeisolationsstruktur nach einem der Ansprüche 1 bis 7, wobei die inneren isolierenden Lufteinschlussschichten und die wasserdampfdurchlässigen, luftundurchlässigen Filmschichten in der Form getrennter Schichten vorliegen, die verschachtelt sind.

9. Wärmeisolationsstruktur nach einem der Ansprüche 1 bis 7, wobei die luftundurchlässigen wasserdampfdurchlässigen Filmschichten als Beschichtungen auf den jeweiligen Oberflächen der isolierenden Lufteinschlussschichten ausgebildet sind.

10. Wärmeisolationsstruktur nach einem der Ansprüche 1 bis 9, wobei es fünf abwechselnde Schichten gibt, wobei es drei innere Schichten gibt einschließlich Isolierschichten, die Luft einfangen, getrennt durch eine wasserdampfdurchlässige luftundurchlässige Filmschicht und geschichtet zwischen den beiden äußeren wasserdampfdurchlässigen und luft- und flüssigkeitsundurchlässigen äußeren Filmschichten.

11. Wärmeisolationsstruktur nach einem der Ansprüche 1 bis 10, wobei etwaige der Filmschichten einen oder mehrere Filme enthalten oder ein Filmcomposite bilden können mit einer Spinnvliesschicht, adhäsiv intermittierend an einen Film gebondet, ob die isolierenden Lufteinschlussschichten trennend oder die äußeren Filmschichten bildend.

12. Wärmeisolationsstruktur nach einem der Ansprüche 1 bis 11, wobei die ersten und zweiten äußeren Filmschichten oder die luftundurchlässigen Filmschichten feuchtigkeitsdampfdurchlässige monolithische Filme, feuchtigkeitsdampfdurchlässige mikroporöse Filme oder eine Kombination aus feuchtigkeitsdampfdurchlässigen monolithischen und feuchtigkeitsdampfdurchlässigen mikroporösen Filmen bilden.

13. Wärmeisolationsstruktur nach einem der Ansprüche 1 bis 12, wobei die luftundurchlässigen ersten und zweiten äußeren Filmschichten oder die luftundurchlässigen Filmschichten Infrarot reflektieren.

14. Wärmeisolationsstruktur nach Anspruch 13, wobei die ersten und zweiten äußeren Filmschichten oder die luftundurchlässigen Filmschichten metallisiert sind, bevorzugt aluminisiert, damit die ersten und zweiten äußeren Filmschichten oder die luftundurchlässigen Filmschichten Infrarot reflektieren können.

15. Wärmeisolationsstruktur nach Anspruch 13 und mit einem Infrarot reflektierenden Material in der Struktur der Filmschichten, damit die ersten und zweiten äußeren Filmschichten oder die luftundurchlässigen Filmschichten Infrarot reflektierend werden.

16. Wärmeisolationsstruktur nach Anspruch 15, wobei das Infrarot reflektierende Material ein feinpulveriges Metall oder Material in Teilchenform ist.

17. Wärmeisolationsstruktur nach Anspruch 16, wobei das Infrarot reflektierende Mineral wie etwa Glimmer von gefärbter Form ist, damit der Film sowohl Farbe als auch Glanz erhält.

18. Wärmeisolationsstruktur nach Ansprüche 16 oder 17, wobei die oder jede der ersten und zweiten äußeren Filmschichten oder der luftundurchlässigen Filmschichten einen Celluloseacetatfilm umfaßt.

19. Wärmeisolationsstruktur nach einem der Ansprüche 1 bis 18, wobei mindestens eine und bevorzugt alle der isolierenden Lufteinschlussschichten aus einem faserartigen oder fadenartigen Material ist/sind, wobei jedes davon eine Wattierung darstellt.

20. Wärmeisolationsstruktur nach Anspruch 19, wobei die Fasern oder Fäden der Wattierung dieser Nachgiebigkeit verleihen.

21. Wärmeisolationsstruktur nach Anspruch 20, wobei die Fasern oder Fäden der Wattierung gemischt sind, um die Nachgiebigkeit der Wattierung **dadurch** zu verbessern, dass sehr nachgiebige Fasern zu der Faser- oder Fadenmischung aufgenommen werden wie etwa Polyester, oder indem ein nachgiebiges Bindemittel oder andere nachgiebige Additive verwendet werden, wie etwa Bindemittelfasern oder -fäden.

22. Wärmeisolationsstruktur nach einem der Ansprüche 19 bis 21, wobei die Wattierung maßhaltig ist.

23. Wärmeisolationsstruktur nach einem der Ansprüche 19 bis 22, wobei Materialien, die die Wärmeeigenschaften der Isolation verbessern, in Zwischenräumen zwischen den Fasern oder Fäden der Wattierung gefangen sind.

24. Wärmeisolationsstruktur nach einem der Ansprüche 19 bis 23, wobei die Wattierung, die mindestens eine und bevorzugt alle der isolierenden Lufteinschlussschichten darstellt, eine Dicke im Bereich von 5 mm bis 10 mm aufweist.

25. Wärmeisolationsstruktur nach einem der Ansprüche 19 bis 24, wobei die Wattierung, die mindestens eine der isolierenden Lufteinschlussschichten darstellt, eine Dichte im Bereich von 7 kg/m³ bis 14 kg/m³ aufweist.

26. Wärmeisolationsstruktur nach Anspruch 25, wobei alle Wattierung, die die isolierenden Lufteinschlussschichten darstellt, eine Dichte im Bereich von 7 kg/m³ bis 14 kg/m³ aufweist.

27. Wärmeisolationsstruktur nach einem der Ansprüche 19 bis 26, wobei die isolierenden Lufteinschlussschichten eine zumindest im Wesentlichen kontinuierliche, planare Form aufweisen.

28. Wärmeisolationsstruktur nach einem der Ansprüche 19 bis 26, wobei die isolierenden Lufteinschlussschichten entgegengesetzt weisende Oberflächen aufweisen, die zumindest im Wesentlichen kontinuierlich und planar sind.

29. Wärmeisolationsstruktur nach einem der Ansprüche 1 bis 28, wobei die äußeren Filmschichten und die inneren Filmschichten alle nicht-thermoplastischen luftundurchlässigen und feuchtigkeitsdampfdurchlässigen Filmschichten umfassen, die auf eine thermoplastische Vliesträgerschicht laminiert sind, die breiter ist als die nicht-thermoplastische Filmschicht, auf die sie laminiert ist, bevorzugt durch intermittierendes Klebebonden, wodurch thermoplastische Kantenbereiche zu der nicht-thermoplastischen zentralen Filmschicht gebildet werden, die durch die thermoplastischen Vlieskanten nahe den inneren Filmschichten geschweißt werden.

30. Wärmeisolationsstruktur nach Anspruch 29 und mit geschlitzten Vlieskanten jenseits der Schweißlinien, wobei Spinvlies entlang der Kanten frei gelassen wird, das beim Platzieren der Isolationsstruktur zwischen den Dachsparren in einem Dachraum raue Oberflächen der Dachsparren reibungsmäßig in Eingriff nehmen kann, um das Festhalten der Isolationsstruktur zu unterstützen.

31. Wärmeisolationsstruktur nach einem der Ansprüche 1 bis 30 und mit entgegengesetzt weisenden Seitenkanten, entlang derer die ersten und zweiten äußeren Schichten laminiert sind, ohne dass sich in den inneren oder äußeren Schichten und der Isolationsstruktur als Ganzes irgendwelche Perforationen oder Einstiche befinden.

32. Wärmeisolationsstruktur nach einem der Ansprüche 1 bis 30 und zusammengehalten entlang entgegengesetzt weisender Seitenkanten davon, ohne dass sich in den inneren oder äußeren Schichten und der Isolationsstruktur als Ganzes irgendwelche Perforationen oder Einstiche befinden.

33. Wärmeisolationsstruktur nach Anspruch 31 oder 32 und zusammengehalten durch Klebebonden bei den oder nahe den entgegengesetzt weisenden Seitenkanten.

34. Wärmeisolationsstruktur nach Anspruch 31 oder 32 und zusammengehalten durch Heißverschweißen bei den oder nahe den entgegengesetzt weisenden Seitenkanten.

35. Wärmeisolationsstruktur nach Anspruch 34, wobei die äußeren und inneren Schichten aus kompatiblen Materialien bestehen und wobei das Heißverschweißen durch einen wärmebondenden Prägekalander durch die äußeren und inneren Schichten erfolgt.

36. Wärmeisolationsstruktur nach Anspruch 34, wobei die äußeren und inneren Schichten aus inkompatiblen Materialien bestehen und wobei das Heißverschweißen durch einen wärmebondenden Prägekalander durch Abschnitte der beiden äußeren Schichten erfolgt, die überhängen oder sich umfangsmäßig über die inneren Schichten hinaus erstrecken.

37. Wärmeisolationsstruktur nach Anspruch 34, wobei das Heißverschweißen Ultraschallschweißen ist.

38. Wärmeisolationsstruktur nach Anspruch 37 einschließlich intermittierender gemusterter Schweißstellen oder Bondstellen, die sich entlang gegenüber liegender Seitenkanten der Isolationsstruktur erstrecken.

39. Verfahren zum Herstellen einer Wärmeisolationsstruktur nach einem der Ansprüche 1 bis 38, einschließlich Bonden mindestens der ersten und zweiten Außenschichten miteinander entlang entgegengesetzt weisender Seitenkanten der Isolationsstruktur, ohne in den inneren und äußeren Schichten und der Isolationsstruktur als Ganzes irgendwelche Perforationen oder Einstiche zu bewirken.

40. Verfahren nach Anspruch 39, wobei mindestens die äußeren Schichten durch Klebebonden bei den oder nahe den entgegengesetzt weisenden Seitenkanten der Isolationsschicht miteinander gebondet werden.

41. Verfahren nach Anspruch 40, wobei das Klebebonden ein Schmelzklebebonden ist.

42. Verfahren nach Anspruch 39, wobei mindestens die äußeren Schichten durch Heißverschweißen bei den oder nahe den entgegengesetzt weisenden Seitenkanten der Isolationsschicht miteinander gebondet werden.

43. Verfahren nach Anspruch 42, wobei das Heißverschweißen in Form direkter Hitze erfolgt, die in direkten Kontakt mit den äußeren Schichten aufgebracht wird.

44. Verfahren nach Anspruch 42, wobei die äußeren und inneren Schichten aus kompatiblen Materialien bestehen und wobei das Heißverschweißen durch einen wärmebondenden Prägekalander durch die äußeren und inneren Schichten erfolgt.

45. Verfahren nach Anspruch 42, wobei die inneren und äußeren Schichten aus inkompatiblen Materialien bestehen und wobei das Heißverschweißen durch einen wärmebondenden Prägekalander durch Abschnitte der beiden äußeren Schichten erfolgt, die überhängen oder sich umfangsmäßig über die inneren Schichten hinaus erstrecken.

46. Verfahren nach Anspruch 42, wobei das Heißverschweißen Ultraschallschweißen ist.

47. Verfahren nach Anspruch 46, wobei das Ultraschallschweißen unter Verwendung eines Ultraschallapplikators wie etwa eines Drehhorns, das ein Schweißmuster trägt, durchgeführt wird.

48. Verfahren nach Anspruch 47, wobei der Ultraschallapplikator wie etwa ein Drehhorn, das das Schweißmuster trägt, mit einer einfachen Ambosswalze mit glatter Oberfläche zusammenarbeitet.

49. Wärmeisolationsstruktur nach einem der Ansprüche 19 bis 38 und die je nach ihrer Anfangsdicke signifikant auf eine Höhe zusammengedrückt werden kann und dennoch sich die Wattierungsschichten, wenn die Kompression entfernt wird, im Wesentlichen zu ihrer ursprünglichen Höhe wiederherstellen können.

50. Wärmeisolationsstruktur nach einem der Ansprüche 1 bis 38 oder 49, wobei die Schichten derart aufgebaut und ausgelegt sind, dass die Isolationsstruktur flexibel sein kann und **dadurch** die Isolationsstruktur in Rollenform vorgelegt werden kann, um die Handhabung, die Lagerung, den Transport und das Verlegen zu erleichtern.

51. Verwendung einer Wärmeisolationsstruktur nach einem der Ansprüche 1 bis 38, 49 oder 50 als Dachunterspannbahn in einem Gebäude.

## Revendications

1. Structure d'isolation thermique comprenant une pluralité de couches internes isolantes perméables à l'air et à la vapeur d'eau destinées à piéger l'air et une couche formant film perméable à la vapeur d'eau et au moins sensiblement imperméable à l'air séparant les deux dites couches isolantes perméables à la vapeur d'eau, les couches internes étant prises en sandwich entre une première et une deuxième couches externes formant film imperméables à l'air et à l'eau, perméables à la vapeur d'eau, la construction et la disposition des couches étant conçues de manière à contrôler, en utilisation, la transmission de la vapeur d'eau à travers la structure d'isolation thermique.

2. Structure d'isolation thermique comprenant une pluralité de couches isolantes alternées perméables à l'air et à la vapeur d'eau destinées à piéger l'air et des couches formant film perméables à la vapeur d'eau et imperméables à l'air, la première et la deuxième des couches externes formant film étant imperméables à un liquide et prenant en sandwich les couches internes des couches isolantes et formant film, la construction et la disposition des couches isolantes et formant film étant conçues de manière à contrôler, en utilisation, la transmission de la vapeur d'eau à travers la structure d'isolation thermique.

3. Structure d'isolation thermique selon les revendications 1 ou 2, dans laquelle l'une des couches externes formant film présente une perméabilité à la vapeur d'eau inférieure à celle des couches internes et de l'autre couche externe de manière à contrôler, en utilisation, la transmission de la vapeur d'eau à travers la structure d'isolation thermique.

4. Structure d'isolation thermique selon les revendications 1 ou 2, dans laquelle les couches internes formant film présentent une perméabilité à la vapeur d'eau supérieure ou égale à la perméabilité à la vapeur d'eau de la première couche externe formant film destinée à revêtir ce qui serait le côté le plus humide de la structure d'isolation en utilisation et qui correspondrait à l'intérieur d'un bâtiment.

5. Structure d'isolation thermique selon les revendications 1 ou 2, dans laquelle la deuxième couche externe formant film destinée à revêtir le côté le moins humide de la structure, en utilisation, et qui correspondrait à l'extérieur d'un bâtiment, présente une perméabilité à la vapeur d'eau supérieure ou égale à celle des couches internes formant film.

6. Structure d'isolation thermique selon les revendications 1 ou 2, dans laquelle la couche la plus à l'extérieur, ou la plus élevée s'il s'agit d'une structure formant toit, des deux couches externes formant film présente une perméabilité à la vapeur d'eau au moins égale à celle d'un quelconque autre élément de la structure formant film.

7. Structure d'isolation thermique selon les revendications 1 ou 2, dans laquelle les première et deuxième couches externes formant film, et les couches internes formant film présentent toutes la même ou sensiblement la même perméabilité à la vapeur d'eau, en utilisation avec un deuxième élément du bâtiment pour être installées de manière à ce que la première ou la deuxième couches externes formant film soit tournée vers l'intérieur du bâtiment.

8. Structure d'isolation thermique selon l'une quelconque des revendications 1 à 7, dans laquelle les couches internes isolantes à occlusion d'air et les couches formant film perméables à la vapeur d'eau et imperméables à l'air se présentent sous la forme de couches séparées qui sont intercalées.

9. Structure d'isolation thermique selon l'une quelconque des revendications 1 à 7, dans laquelle les couches formant film imperméables à l'air et perméables à la vapeur d'eau forment un revêtement sur les surfaces correspondantes des couches isolantes à occlusion d'air.

10. Structure d'isolation thermique selon l'une quelconque des revendications 1 à 9, dans laquelle il y a cinq couches alternées, avec trois couches internes comprenant deux dites couches isolantes qui piègent l'air séparées par une dite couche formant film perméable à la vapeur d'eau et imperméable à l'air et qui sont prises en sandwich entre les deux dites couches externes formant film perméables à la vapeur d'eau et imperméables à l'air et aux liquides.

11. Structure d'isolation thermique selon l'une quelconque des revendications 1 à 10, dans laquelle l'une quelconque des couches formant film peut comporter un ou plusieurs films, ou constituer un film composite comportant une couche non tissée contrecollée de façon discontinue sur un film séparant les couches isolantes à occlusion d'air ou constituant les couches externes formant film.

12. Structure d'isolation thermique selon l'une quelconque des revendications 1 à 11, dans laquelle les première et deuxième couches externes formant film ou les couches formant film imperméables à l'air comprennent des film monolithiques perméables à la vapeur d'eau, des film microporeux perméables à la vapeur d'eau ou une combinaison de film monolithiques perméables à la vapeur d'eau et de film microporeux perméables à la vapeur d'eau.

13. Structure d'isolation thermique selon l'une quelconque des revendications 1 à 12, dans laquelle les première et deuxième couches externes formant film imperméables à l'air ou les couches formant film imperméables à l'air sont réfléchissantes dans l'infrarouge.

14. Structure d'isolation thermique selon la revendication 13, dans laquelle les première et deuxième couches externes formant film ou les couches formant film imperméables à l'air sont métallisées, de préférence recouvertes d'aluminium, pour rendre les première et deuxième couches externes formant film ou les couches formant film imperméables à l'air réfléchissantes dans l'infrarouge.

15. Structure d'isolation thermique selon la revendication 13, comprenant un matériau réfléchissant dans l'infrarouge à l'intérieur de la structure des couches formant film pour rendre la première et la deuxième couches externes formant film ou les couches formant film imperméables à l'air réfléchissantes dans l'infrarouge.

16. Structure d'isolation thermique selon la revendication 15, dans laquelle le matériau réfléchissant dans l'infrarouge est une fine poudre métallique ou un minéral sous forme de particules.

17. Structure d'isolation thermique selon la revendication 16, dans laquelle le minéral réfléchissant dans l'infrarouge, tel que le mica, est de forme colorée pour donner de la couleur et du lustre au film.

18. Structure d'isolation thermique selon les revendications 16 ou 17, dans laquelle chacune des première et deuxième couches externes formant film, ou les couches formant film imperméables à l'air comprennent un film en acétate de cellulose.

19. Structure d'isolation thermique selon l'une quelconque des revendications 1 à 18, dans laquelle au moins une des couches isolantes à occlusion d'air, et de préférence toutes, est/sont constituée(s) d'un matériau fibreux ou filamenteux, chacune d'entre elles constituant une nappe ouatée.

20. Structure d'isolation thermique selon la revendication 19, dans laquelle les fibres ou filaments de la nappe ouatée lui confèrent sa résilience.

21. Structure d'isolation thermique selon la revendication 20, dans laquelle les fibres ou les filaments de la nappe ouatée sont mélangés pour en améliorer la résilience par l'inclusion de fibres à haute résilience, par exemple un polyester, ou par l'ajout d'un liant résiliant ou autres additifs résilients, tels que des fibres ou filaments de liage, au mélange de fibres ou de filaments.

22. Structure d'isolation thermique selon l'une quelconque des revendications 19 à 21, dans laquelle la nappe ouatée est indéformable.

23. Structure d'isolation thermique selon l'une quelconque des revendications 19 à 22, dans laquelle les matériaux qui renforcent les propriétés thermiques de l'isolation sont piégés dans les interstices situés entre les fibres ou les filaments de la nappe ouatée.

24. Structure d'isolation thermique selon l'une quelconque des revendications 19 à 23, dans laquelle la nappe ouatée constituant au moins une couche isolante à occlusion d'air, et de préférence toutes, présente une épaisseur allant de 5 à 10 mm.

25. Structure d'isolation thermique selon l'une quelconque des revendications 19 à 24, dans laquelle la nappe ouatée constituant au moins une couche isolante à occlusion d'air, présente une densité variant entre 7 kg/m³ et 14 kg/m³.

26. Structure d'isolation thermique selon la revendication 25, dans laquelle toute la nappe ouatée constituant les couches isolantes à occlusion d'air présente une densité variant entre 7 kg/m³ et 14 kg/m³.

27. Structure d'isolation thermique selon l'une quelconque des revendications 19 à 26, dans laquelle les couches isolantes à occlusion d'air sont de forme planaire au moins sensiblement continue.

28. Structure d'isolation thermique selon l'une quelconque des revendications 19 à 26, dans laquelle les couches isolantes à occlusion d'air ont des surfaces opposées qui sont au moins sensiblement continues et planaires.

29. Structure d'isolation thermique selon l'une quelconque des revendications 1 à 28, dans laquelle les couches externes formant film et les couches internes formant film comprennent toutes des couches formant film imperméables à l'air et perméables à la vapeur d'eau non thermoplastiques contrecollés sur une couche formant support thermoplastique non tissé qui est plus large que la couche formant film non thermoplastique sur laquelle elle est contrecollée, de préférence par liaison adhésive discontinue, formant ainsi des zones de chant thermoplastiques sur la couche centrale formant film non thermoplastique qui sont soudées sur les bords thermoplastiques non tissés près des couches internes formant film.

30. Structure d'isolation thermique selon la revendication 29, possédant des bords non tissés fendus au-delà des lignes de soudure, laissant des monofils non tissés libres le long des bords qui, lorsque la structure d'isolation est placée entre les chevrons du toit dans des combles, peuvent coopérer en friction avec les surfaces rugueuses des chevrons de toit afin de faciliter le maintien en place de la structure d'isolation.

31. Structure d'isolation thermique selon l'une quelconque des revendications 1 à 30, possédant des bords latéraux opposés le long desquels au moins la première et la deuxième couches externes sont contrecollées sans qu'il n'y ait aucun trou ni perforation dans les couches internes et externes ni dans la structure d'isolation dans son ensemble.

32. Structure d'isolation thermique selon l'une quelconque des revendications 1 à 30, maintenue le long de ses bords latéraux opposés sans qu'il n'y ait de trou ou de perforation dans les couches internes et externes ni dans la structure d'isolation dans son ensemble.

33. Structure d'isolation thermique selon les revendications 31 ou 32, maintenue sur ses bords latéraux opposés, ou à proximité de ces derniers, par collage.

34. Structure d'isolation thermique selon les revendications 31 ou 32, maintenue sur ses bords latéraux opposés, ou à proximité de ces derniers, par thermosoudage.

35. Structure d'isolation thermique selon la revendication 34, dans laquelle les couches externes et internes sont constituées de matériaux compatibles et dans laquelle le thermosoudage est réalisé à l'aide d'une calandre gaufrée de thermoliage à travers les couches internes et externes.

36. Structure d'isolation thermique selon la revendication 34, dans laquelle les couches externes et internes sont constituées de matériaux incompatibles et dans laquelle le thermosoudage est réalisé à l'aide d'une calandre gaufrée de thermoliage à travers des parties des deux couches externes qui débordent ou s'étendent sur la périphérie au-delà des couches internes.

37. Structure d'isolation thermique selon la revendication 34, dans laquelle le thermosoudage est un soudage par ultrasons.

38. Structure d'isolation thermique selon la revendication 37, comprenant des soudures ou liaisons suivant un motif discontinu s'étendant le long des bords latéraux opposés de la structure d'isolation.

39. Procédé de fabrication d'une structure d'isolation thermique selon l'une quelconque des revendications 1 à 38, comprenant le collage ensemble d'au moins la première et la deuxième couches externes le long des bords latéraux opposés de la structure d'isolation sans causer ni trou ni perforation dans les couches internes et externes ni dans la structure d'isolation dans son ensemble.

40. Procédé selon la revendication 40, dans lequel au moins les couches externes sont liées ensemble au niveau des bords latéraux opposés de la structure d'isolation, ou à proximité de ces derniers, par collage.

41. Procédé selon la revendication 40, dans lequel le collage est un collage thermofusible.

42. Procédé selon la revendication 39, dans lequel au moins les couches externes sont collées ensemble au niveau des bords latéraux opposés de la structure d'isolation, ou à proximité de ces derniers, par thermosoudage.

43. Procédé selon la revendication 42, dans lequel le thermosoudage est réalisé par un apport de chaleur mise au contact direct des couches externes.

44. Procédé selon la revendication 42, dans lequel les couches externes et internes sont constituées de matériaux compatibles et dans laquelle le thermosoudage est réalisé à l'aide d'une calandre gaufrée de thermoliage à travers les couches internes et externes.

45. Procédé selon la revendication 42, dans lequel les couches externes et internes sont constituées de matériaux incompatibles et dans lequel le thermosoudage est réalisé à l'aide d'une calandre gaufrée de thermoliage à travers des parties des deux couches externes qui débordent ou s'étendent sur la périphérie au-delà des couches internes.

46. Procédé selon la revendication 42, dans lequel le thermosoudage est un soudage par ultrasons.

47. Procédé selon la revendication 46, dans lequel le soudage par ultrasons est réalisé à l'aide d'un applicateur d'ultrasons, par exemple une sonotrode rotative, qui produit le motif de soudage.

48. Procédé selon la revendication 47, dans lequel l'applicateur d'ultrasons, par exemple une sonotrode rotative, qui produit le motif de soudage, coopère avec un rouleau enclume uni à surface lisse.

49. Structure d'isolation thermique selon l'une quelconque des revendications 19 à 38, pouvant être significativement comprimée jusqu'à un niveau dépendant de son épaisseur initiale, et une fois la compression supprimée, les couches de la nappe ouatée pouvant reprendre sensiblement leur gonflant initial.

50. Structure d'isolation thermique selon l'une quelconque des revendications 1 à 38 ou 49, dans laquelle les couches sont construites et disposées de sorte à garantir la souplesse de la structure d'isolation et ainsi permettre à celle-ci d'être proposée sous la forme de rouleaux pour en faciliter la manutention, le stockage, le transport et la pose.

51. Utilisation d'une structure d'isolation thermique selon l'une quelconque des revendications 1 à 38, 49 ou 50, comme sous-couche de toiture dans un bâtiment.
